# EUROPÄISCHE PATENTSCHRIFT

(11) **EP 0 761 426 B1**
(45) Veröffentlichungstag und Bekanntmachung des Hinweises auf die Patenterteilung: **08.12.1999**
(21) Anmeldenummer: 96114345.0
(22) Anmeldetag: 07.09.1996
(51) Int. Cl.: B32B 15/01, B60B 1/00

(54) **Radspeiche**
Wheel spoke
Rayon d'une roue

(30) Priorität: 11.09.1995 DE 19533572
(43) Veröffentlichungstag der Anmeldung: 12.03.1997
(73) Patentinhaber: Büchel, Röder & Partner GmbH, 36456 Barchfeld/Werra (DE)
(72) Erfinder: Müller, Volker, Dr., 07318 Saalfeld (DE)
(74) Vertreter: Kirschner, Klaus Dieter, Dipl.-Phys.

(56) Entgegenhaltungen:
- EP-A- 0 142 224
- EP-A- 0 563 735
- GB-A- 2 085 330
- PATENT ABSTRACTS OF JAPAN vol. 13, no. 552 (M-903), 8.Dezember 1989 & JP-A-01 226401 (SUZUKI MOTOR CO.LTD.), 11.September 1989,

## Beschreibung

Die Erfindung bezieht sich auf eine Radspeiche sowie ein Verfahren zur Herstellung der Radspeiche selbst.

Bisher werden Radspeichen aus verzinktem Stahldraht oder aus einem massiven Edelstahldraht hergestellt. Nachteilig bei verzinkten Radspeichen ist es, daß sie bei einer Beschädigung der Oberfläche nur eine kurzzeitige Korrosionsbeständigkeit aufweisen. Auch der Glanz der Oberfläche geht schnell verloren. Nichtrostende Speichen aus massivem Edelstahl sind zwar korrosionsbeständig und weisen für eine lange Zeit eine glänzende Oberfläche auf, bereiten jedoch Probleme beim Einspeichen der Radspeichen in das Rad. Die Probleme bestehen darin, daß bei geringfügigen Unterschieden der Speichenlänge einige Speichen höher beansprucht werden als andere. Diese höhere Beanspruchung kann aufgrund der Veränderung des Gefüges - es bildet sich Verformungsmartensit - zu einer Beeinträchtigung der technologischen Eigenschaften der massiven, rostbeständigen Speichen führen. Zudem kommt es zu Brüchen an den Stellen der Speiche, wo die rechtwinklige Abdantung des Kopfes vorgenommen wird. Durch die Abkantung kann das Gefüge sich verändern. Dies kann mit zunehmender Beanspruchung zum Versagen des Bauteils führen.

Das Dokument GB-A 20 85 330 offenbart ein Verfahren zur Herstellung eines verkleideten Stahlproduktes, wobei ein Stahlrohr oder Stab bzw. ein Rohr und ein Stab in ein weiteres Rohr eingeführt wird, woraufhin dieses Anordnung kaltgezogen wird, um ein Zwischenprodukt zu erzielen, bei dem das Rohr und der Stab miteinander verbunden sind, woraufhin das Zwischenprodukt erwärmt wird, so daß es warm bearbeitet werden kann, zur Ausbildung eines gewünschten plattierten Stabproduktes.

Der Erfindung liegt die Aufgabe zugrunde, eine Radspeiche bereitzustellen bzw. ein Verfahren zur Herstellung der Radspeiche anzugeben, wodurch die oben genannten Probleme weitgehend gelöst werden.

Eine erfindungsgemäße Radspeiche ist in Anspruch 1 gekennzeichnet. Überraschenderweise hat sich gezeigt, daß eine Kombination von einem unlegierten Stahlkern mit einem nichtrostenden, plattierten Mantel dazu führt, daß guten Korrosionseigenschaften zusammen mit hervorragenden technologischen Eigenschaften verbunden sind. Die Belastbarkeit an allen kritischen Stellen der Speiche wird nicht mehr beeinträchtigt. Der unlegierte oder niedriglegierte Kern behält sein Gefüge und weist unter schwingender Beanspruchungen eine hohe Belastbarkeit auf.

Ein vorteilhafte Ausgestaltung der Erfindung ist in Anspruch 4 gekennzeichnet. Dabei werden auch die Ressourcen geschont, da die Elemente Chrom und Nickel nur als strategische Elemente eingesetzt werden und deren Verbrauch verringert werden kann.

Schließlich dient auch das Verfahren nach Anspruch 8 zur Lösung der Aufgabe, da eine Maßnahme zur Eindämmung der nachteiligen Auswirkungen von Korrosion angegeben wird.

Vorteilhafte Ausgestaltungen der Erfindung ergeben sich aus den restlichen abhängigen Ansprüchen.

Im folgenden wird zunächst die Radspeiche beschrieben, die einen Kern aus unlegiertem bis niedriglegiertem Stahl und einem Mantel aus korrosionsbeständigem Edelstahl aufweist. Als Material für den Kern kommt niedriglegierter Kohlenstoffstahl mit 0,1 bis 0,4% C, vorzugsweise 0,2 bis 0,3% C, beispielsweise C22, D25 oder dergl., in Frage.

Das Material für den Mantel kann aus ferritischem, nicht rostendem Stahl mit einem Chromgehalt von weniger als 12%, bzw. aus einem austenitischen, nicht rostenden Chrom-Nickel-Stahl bestehen. Zur Gewährleistung besonders hoher Korrosionsbeständigkeit kann der Chrom-Nickel-Stahl mit Molybdän und Titan legiert sein (beispielsweise Wst. Nr. 1.4301, 1.4401, 1.4571 oder dergl. Bei einem austenitischem, nicht rostenden Chrom-Nickel-Stahl werden zur Gewährleistung besonders hoher Korrosionsbeständigkeit eines oder mehrere korrosionshemmende Elemente wie Molybdän, Stickstoff, Titan, Niob verwendet.

Der Querschnittsanteil des Mantels an dem Gesamtquerschnitt des ummantelten Drahtes beträgt 20 bis 30%. Dies ist, wie noch weiter unten erläutert wird, auch in Zusammenhang mit der Korrosionsbeständigkeit im Bereich Speichenkopfes und Speichengewindes vorteilhaft.

Das Verfahren zur Herstellung eines ummantelten Stahldrahtes für eine Radspeiche der oben beschriebenen Art besteht darin, daß der Mantel auf dem Stahldraht durch mechanisches Plattieren aufgebracht wird. Danach wird der plattierte Draht einer Kaltumformung gefolgt von einer Wärmebehandlung, wie Zwischenglühen, unterzogen, und diese beiden Schritte werden erforderlichenfalls wiederholt, bis das Produkt auf eine Festigkeit gebracht ist, die der Herstellung von Radspeichen gefordert wird.

Die Kaltumformung besteht im speziellen Fall aus einer Ziehumformung, wobei die hervorgerufene Querschnittsänderung 50 bis 90%, vorzugsweise 60% bis 80%, beträgt.

Die Wärmebehandlung besteht im speziellen Fall in einem Durchlaufglühen unter Schutzgas, beispielsweise ein Stickstoff-Wasserstoff-Gemisch mit mehr als 75% Wasserstoffanteil, vorzugsweise mehr als 90% Wasserstoffanteil, bei einer Ofentemperatur von etwa 1100°C, wobei die Behandlungszeit je nach Drahtdurchmesser zwischen 60 und 120 Sekunden liegt.

Schließlich soll die Querschnittsänderung, wenn sie nach dem Zwischenglühen wiederholt wird, in einem Bereich von 50% bis 90%, vorzugweise 70% bis 80% liegen, um die geforderte Drahtfestigkeit bei gleichzeitiger Erhaltung einer ausreichende Duktilität der Mantelwerkstoffes zu erreichen.

Das Verfahren zur Herstellung einer Radspeiche aus einem Drahtausgangsmaterial, wobei an ein abgelenktes Stück des Drahtausgangsmaterials an einem Ende ein Gewinde gefertigt und an dem anderen Ende ein Kopf abgekantet und angestaucht wird, besteht darin, daß als Drahtausgangsmaterial ein ummantelter Stahldraht verwendet wird, der in der oben beschriebenen Weise hergestellt ist.

Das Gewinde der Speiche wird in dem Mantel gefertigt, so daß keine Korrosionsgefahr in diesem Bereich besteht. Beim Anstauchen des Kopfes schließt sich das Material des Mantels über dem Kopf vollständig, so daß auch hier keine Korrosion stattfinden kann. Dies ist insbesondere desshalb möglich weil der Querschnittsanteil des Mantels an dem Gesamtquerschnitt des ummantelten Drahtes beträgt 20 bis 30%, sodaß genügend Material am Gewinde und am Kopf der Speiche vorhanden ist.

## Patentansprüche

1. Radspeiche dadurch gekennzeichnet, daß sie einen Kern aus unlegiertem bis niedrig legiertem Stahl und einen Mantel aus korrosionsbeständigen Edelstahl aufweist.

2. Radspeiche nach Anspruch 1, dadurch gekennzeichnet, daß der Kern aus niedrig legiertem Kohlenstoffstahl mit 0,1 bis 0,4 % C, vorzugsweise 0,2 bis 0,3% C besteht.

3. Radspeiche nach Anspruch 1 oder 2, dadurch gekennzeichnet, daß der Mantel aus ferritischem, nichtrostendem Stahl mit einem Chromgehalt von wenigstens 12% besteht.

4. Radspeiche nach einem der Ansprüche 1 oder 2, dadurch gekennzeichnet, daß der Mantel aus einem Chrom-Nickel-Stahl besteht.

5. Radspeiche nach Anspruch 4, dadurch gekennzeichnet, daß der Mantel eines oder mehrere korrosionshemmende Elemente wie Molybdän und Titan aufweist.

6. Radspeiche nach Anspruch 4, dadurch gekennzeichnet, daß der Mantel aus einem austenitischem, nichtrostendem Chrom-Nickel-Stahl besteht, und daß der Mantel eines oder mehrere korrosionshemmende Elemente wie Molybdän, Stickstoff, Titan oder Niob enthalt.

7. Radspeiche nach einem der vorhergehenden Ansprüche, dadurch gekennzeichnet, daß der Querschnittsanteil des Mantels 20% bis 30% beträgt.

8. Verfahren zur Herstellung einer Radspeiche nach einem der Ansprüche 1 bis 7 aus einem Drahtausgangsmaterial, wobei an ein abgehängtes Stück des Drahtausgangsmaterials am einen Ende ein Gewinde gefertigt und am anderen Ende ein Kopf abgekantet und angestaucht wird, wobei als Drahtausgangsmaterial ein ummantelter Stahldraht verwendet wird wobei der Mantel auf den Stahldraht durch mechanisches Plattieren aufgebracht wird und wobei das Gewinde in dem Mantel gefertigt wird.

9. Verfahren nach Anspruch 8, dadurch gekennzeichnet, daß beim Anstauchen des Kopfes das Material des Mantels über dem Kopf geschlossen wird.

## Claims

1. Wheel spoke characterized in that it comprises a core out of un-alloyed to low-alloyed steel and an envelope out of corrosion-proof high-quality steel.

2. Wheel spoke according to claim 1, characterized in that the core consists out of low-alloyed carbon steel having 0,1 to 0,4 % C, preferably 0,2 to 0,3 % C.

3. Wheel spoke according to claim 1 or 2, characterized in that the envelope consists of out of ferritic, stainless steel having a contents of chromium of at least 12 %.

4. Wheel spoke according to one of the claims 1 or 2, characterized in that the envelope consists of a chromium-nickel-steel.

5. Wheel spoke according to claim 4, characterized in that the envelope comprises one or several corossion-inhibiting elements like molybdenum and titanium.

6. Wheel spoke according to claim 4, characterized in that the envelope consists of an austenitic stainless chromium-nickel-steel, and that the envelope contains one or several corrosion-inhibiting elements like molydenum, nitrogen, titanium or niobium.

7. Wheel spoke according to one of the preceeding claims, characterized in that the cross-sectional portion of the envelope comprises 20 % to 30 %.

8. Method for manufacturing a wheel spoke according to one of the claims 1 to 7 out of a wire starting material, wherein, at one end, a thread is manufactured on a cut piece of the wire starting material, and wherein, at the other end, a head is cant and formed, whereby an enveloped steel wire is used as a wire starting material and whereby the envelope is applied to the steel wire by mechanical plating, and whereby the thread is formed in the envelope.

9. Method according to claim 8, characterized in that while forming the head, the material of the envelope is closed over the head.

## Revendications

1. Rayon de roue,
**caractérisé en ce qu**'il comporte un noyau en acier non allié ou faiblement allié et une enveloppe en acier fin résistant à la corrosion.

2. Rayon de roue selon la revendication 1,
**caractérisé en ce que** le noyau consiste en acier au carbone faiblement allié contenant de 0,1 à 0,4 % C et de préférence de 0,2 à 0,3 % C.

3. Rayon de roue selon la revendication 1 ou 2,
**caractérisé en ce que** l'enveloppe consiste en acier ferritique inoxydable avec une teneur en chrome d'au moins 12 %.

4. Rayon de roue selon l'une des revendications 1 ou 2,
**caractérisé en ce que** l'enveloppe consiste en un acier chrome-nickel.

5. Rayon de roue selon la revendication 4,
**caractérisé en ce que** l'enveloppe contient un ou plusieurs éléments inhibiteurs à la corrosion tels que le molybdène et le titane.

6. Rayon de roue selon la revendication 4,
**caractérisé en ce que** l'enveloppe consiste en un acier chrome-nickel inoxydable, austénitique et que l'enveloppe contient un ou plusieurs éléments inhibiteurs à la corrosion tels que le molybdène, l'azote, le titane ou le niobium.

7. Rayon de roue selon l'une des revendications précédentes,
**caractérisé en ce que** l'enveloppe couvre un pourcentage de 20 % à 30 % de la section transversale.

8. Procédé de fabrication d'un rayon de roue selon l'une quelconque des revendications 1 à 7, dans lequel l'une des extrémités d'un tronçon de fil métallique de départ est filetée et l'autre extrémité est chanfreinée et refoulée de façon à former une tête, le fil métallique de départ utilisé étant constitué par un fil d'acier enveloppé, l'enveloppe étant apliquée sur le fil d'acier par placage mécanique, et le filet extérieur étant réalisé dans l'enveloppe.

9. Procédé de fabrication selon la revendication 8,
**caractérisé en ce que** lors le formage de la tête par refoulement, le matériau de l'enveloppe est fermé au-dessus de la tête.
